# EUROPEAN PATENT APPLICATION

(11) **EP 4 819 467 A1**
(43) Date of publication of application: **07.10.2026**
(21) Application number: 25881478.9
(22) Date of filing: 11.09.2025
(51) Int. Cl.: H02M 1/08, H02M 1/00, H02M 7/00

(54) **SWITCH TRANSISTOR DRIVING VOLTAGE CONTROL CIRCUIT AND METHOD, AND POWER CONVERTER**

(30) Priority: 23.10.2024 CN 202411487993
(71) Applicant: Shanghai Moorewatt Energy Technology Co., Ltd., Shanghai 200131 (CN)
(72) Inventor: SUN, Yanan, Shanghai 200131 (CN)
(74) Representative: Zacco Sweden AB
(86) International application number: PCT/CN2025/120696
(87) International publication number: WO 2026/086472

(57) **Abstract**

The present application relates to a switch transistor driving voltage control circuit and method, and a power converter. The switch transistor driving voltage control circuit in one aspect is used for connecting to each switch transistor in a power converter, and comprises a sampling circuit, a first feedback circuit, a power source circuit and a driving circuit, wherein a first sampling circuit is used for performing sampling processing on an alternating-current-side voltage of a power conversion circuit, so as to obtain a target sampled voltage; the first feedback circuit is used for performing processing according to a first mapping relationship on the basis of the target sampled voltage, so as to obtain a target feedback voltage; the power source circuit is used for outputting a target power source voltage on the basis of the target feedback voltage; and the driving circuit is used for outputting a target driving voltage on the basis of the target power source voltage, so as to drive the switch transistor to be turned on. By using the above switch transistor driving voltage control circuit, the conversion efficiency of a power converter can be improved.

## Description

### RELATED APPLICATIONS

The present application claims the priority of Chinese patent application No. 202411487993X, filed on October 23, 2024, entitled "SWITCHING TRANSISTOR DRIVE VOLTAGE CONTROL CIRCUIT, METHOD, AND POWER CONVERTER," which is hereby incorporated by reference in its entirety.

### TECHNICAL FIELD

The present application relates to the technical field of power conversion, and more particularly to a switching transistor drive voltage control circuit, a method, and a power converter.

### BACKGROUND

A power converter is a power conversion device configured to convert electrical energy from one form to another, thereby achieving energy transmission and control under different power requirements. The operating principle of a power converter involves controlling switching transistors to continuously switch "on" and "off" by a control circuit. The switching transistors perform pulse modulation on the input voltage, thus realizing power conversion such as DC-to-AC voltage conversion or DC-to-DC voltage conversion.

In the related art, the magnitude of the drive voltage that turns on the gate of a switching transistor is fixed, thus resulting in a relatively low conversion efficiency of the power converter.

### SUMMARY

In view of this, it is necessary to address the above technical problems and provide a switching transistor drive voltage control circuit, a method, and a power converter that can improve the conversion efficiency of the power converter.

A first aspect of the present application provides a switching transistor drive voltage control circuit. The switching transistor drive voltage control circuit is configured to connect to each switching transistor in a power conversion circuit, and the switching transistor drive voltage control circuit includes: a first sampling circuit, a first feedback circuit, a power supply circuit, and a drive circuit.

The first sampling circuit is configured to perform a sampling process on an AC-side voltage of the power conversion circuit to obtain a target sample voltage.

The first feedback circuit is configured to perform processing based on the target sample voltage according to a first mapping relationship to obtain a target feedback voltage, wherein the first mapping relationship includes that a magnitude of a feedback voltage corresponding to a first sample voltage is not greater than a magnitude of a feedback voltage corresponding to a second sample voltage, wherein a magnitude of the first sample voltage is greater than a magnitude of the second sample voltage.

The power supply circuit is configured to output a target power supply voltage based on the target feedback voltage, wherein a relationship between a magnitude of the target power supply voltage and a magnitude of the target feedback voltage is a negative correlation.

The drive circuit is configured to output a target drive voltage based on the target power supply voltage to drive conduction of each switching transistor, wherein a switching frequency of each switching transistor varies with a magnitude of the AC-side voltage.

In an embodiment, the first feedback circuit includes:

a first microcontroller, wherein an input terminal of the first microcontroller is connected to an output terminal of the sampling circuit, and an output terminal of the first microcontroller is connected to a feedback input terminal of the power supply circuit.

In an embodiment, the output terminal of the first microcontroller includes a digital-to-analog (DA) output terminal of the first microcontroller.

The first microcontroller is configured to perform the processing based on the target sample voltage according to the first mapping relationship, and output the target feedback voltage through the DA output terminal.

In an embodiment, the output terminal of the first microcontroller includes a duty cycle output terminal; the feedback circuit further includes a first filter circuit, an input terminal of the first filter circuit is connected to the duty cycle output terminal, and an output terminal of the first filter circuit is connected to the feedback input terminal of the power supply circuit.

The first microcontroller is configured to perform the processing based on the target sample voltage according to the first mapping relationship, and output a first duty cycle voltage through the duty cycle output terminal.

The first filter circuit is configured to perform a filtering process on the first duty cycle voltage to obtain the target feedback voltage.

In an embodiment, the first mapping relationship includes that a magnitude of a feedback voltage is linearly related to a magnitude of a sample voltage.

In an embodiment, the first mapping relationship includes that a magnitude of a feedback voltage is non-linearly related to a magnitude of a sample voltage.

In an embodiment, the first feedback circuit includes a rectifier circuit and a second filter circuit.

The rectifier circuit is configured to perform rectification and phase-shifting processing on the target sample voltage to obtain a rectified voltage.

The second filter circuit is configured to perform filtering and amplification processing on the rectified voltage to obtain the target feedback voltage.

In an embodiment, the power supply circuit includes an auxiliary power chip, a first resistor, a second resistor, and a third resistor.

An output terminal of the auxiliary power chip is connected to a first terminal of the first resistor. A feedback input terminal of the auxiliary power chip is connected to a second terminal of the first resistor, a first terminal of the second resistor, and a first terminal of the third resistor.

A second terminal of the second resistor is grounded.

A second terminal of the third resistor is connected to an output terminal of the feedback circuit.

A second aspect of the present application provides a switching transistor drive voltage control circuit, wherein the switching transistor drive voltage control circuit is configured to connect to each switching transistor in a power conversion circuit, and the switching transistor drive voltage control circuit includes: a second feedback circuit, a power supply circuit, and a drive circuit.

The second feedback circuit is configured to obtain a target switching frequency of each switching transistor, and process the target switching frequency according to a second mapping relationship to obtain a target feedback voltage, wherein the second mapping relationship includes that a magnitude of a feedback voltage corresponding to a first switching frequency is not less than a magnitude of a feedback voltage corresponding to a second switching frequency, wherein the first switching frequency is greater than the second switching frequency.

The power supply circuit is configured to output a target power supply voltage based on the target feedback voltage, wherein a relationship between a magnitude of the target power supply voltage and a magnitude of the target feedback voltage is a negative correlation.

The drive circuit is configured to output a target drive voltage based on the target power supply voltage to drive conduction of each switching transistor, wherein a switching frequency of each switching transistor varies with a magnitude of an AC-side voltage of the power conversion circuit.

In an embodiment, the second feedback circuit includes a programmable logic device and a third filter circuit, wherein an input terminal of the third filter circuit is connected to a digital output terminal of the programmable logic device, and an output terminal of the third filter circuit is connected to a feedback input terminal of the power supply circuit.

The programmable logic device is configured to obtain the target switching frequency, process the target switching frequency according to the second mapping relationship, and output a second duty cycle voltage through the digital output terminal.

The third filter circuit is configured to perform a filtering process on the second duty cycle voltage to obtain the target feedback voltage.

A third aspect of the present application further provides a switching transistor drive voltage control method, including:
acquiring a target sample voltage corresponding to an AC-side voltage of a power conversion circuit; and
performing a mapping process on the target sample voltage according to a first mapping relationship to obtain a target feedback voltage, wherein the first mapping relationship includes that a magnitude of a feedback voltage corresponding to a first sample voltage is not greater than a magnitude of a feedback voltage corresponding to a second sample voltage, wherein a magnitude of the first sample voltage is greater than a magnitude of the second sample voltage.

The target feedback voltage is used for determining a target drive voltage based on the target feedback voltage to drive conduction of a switching transistor, a relationship between a magnitude of the target drive voltage and a magnitude of the target feedback voltage is a negative correlation, and a switching frequency of the switching transistor varies with a magnitude of the AC-side voltage.

A fourth aspect of the present application further provides a switching transistor drive voltage control method, including:
obtaining a target switching frequency of a switching transistor of a power conversion circuit; and
processing the target switching frequency according to a second mapping relationship to obtain a target feedback voltage. The second mapping relationship includes that a magnitude of a feedback voltage corresponding to a first switching frequency is not less than a magnitude of a feedback voltage corresponding to a second switching frequency, wherein the first switching frequency is greater than the second switching frequency.

The target feedback voltage is used for determining a target drive voltage based on the target feedback voltage to drive conduction of the switching transistor, a relationship between a magnitude of the target drive voltage and a magnitude of the target feedback voltage is a negative correlation, and a switching frequency of the switching transistor varies with a magnitude of an AC-side voltage of the power conversion circuit.

A fifth aspect of the present application further provides a power converter. The power converter includes the switching transistor drive voltage control circuit according to the first aspect or the second aspect and a power conversion circuit.

The switching transistor drive voltage control circuit is connected to a drive terminal of each switching transistor in the power conversion circuit.

In the switching transistor drive voltage control circuit, the method, and the power converter provided above, the switching transistor drive voltage control circuit in one aspect is configured to connect to each switching transistor in a power conversion circuit, and includes: the first sampling circuit, the first feedback circuit, the power supply circuit, and the drive circuit. The first sampling circuit is configured to perform the sampling process on the AC-side voltage of the power conversion circuit to obtain the target sample voltage. The first feedback circuit is configured to perform the processing based on the target sample voltage according to the first mapping relationship to obtain the target feedback voltage. The first mapping relationship includes that the magnitude of the feedback voltage corresponding to the first sample voltage is not greater than the magnitude of the feedback voltage corresponding to the second sample voltage, wherein the magnitude of the first sample voltage is greater than the magnitude of the second sample voltage. The power supply circuit is configured to output the target power supply voltage based on the target feedback voltage. The relationship between the magnitude of the target power supply voltage and the magnitude of the target feedback voltage is the negative correlation. The drive circuit is configured to output the target drive voltage based on the target power supply voltage to drive conduction of each switching transistor. The switching frequency of each switching transistor varies with the magnitude of the AC-side voltage. In this way, by sampling the AC-side voltage of the power conversion circuit, performing the first process through the first feedback circuit, the feedback voltage that is overall negatively correlated with the first sample voltage is obtained, and then the second process is performed based on the target feedback voltage using the power supply circuit having a feedback voltage control function, to obtain the target power supply voltage that is negatively correlated with the target feedback voltage. Thus, a positive correlation between the magnitude of the drive circuit and the magnitude of the AC-side voltage of the power conversion circuit is established through the first sampling circuit, the first feedback circuit, and the power supply circuit, so that the target drive voltage output by the drive circuit for driving the switching transistor can be dynamically adjusted in the positive correlation with the magnitude of the AC-side voltage, thereby dynamically reducing the drive loss and the conduction loss, and improving the conversion efficiency of the power converter.

### BRIEF DESCRIPTION OF THE DRAWINGS

In order to illustrate the technical solutions in the embodiments of the present application or in the related art more clearly, the accompanying drawings required in the description of the embodiments or the related art will be briefly introduced below. Obviously, the drawings in the following description are only embodiments of the present application, and for those of ordinary skill in the art, other drawings can be obtained based on the disclosed drawings without creative efforts.
FIG. 1 is a structural block diagram of a switch drive voltage control circuit according to an embodiment;
FIG. 2 is a structural block diagram of the switch drive voltage control circuit according to another embodiment;
FIG. 3 is a structural block diagram of the switch drive voltage control circuit according to another embodiment;
FIG. 4 is an exemplary schematic diagram showing voltage waveforms of an AC-side voltage and a drive voltage according to an embodiment;
FIG. 5 is an illustrative schematic diagram showing voltage waveforms of the AC-side voltage, a feedback voltage, and a drive voltage according to an embodiment;
FIG. 6 is a structural block diagram of the switch drive voltage control circuit according to another embodiment;
FIG. 7 is a structural block diagram of the switch drive voltage control circuit according to another embodiment;
FIG. 8 is a structural block diagram of the switch drive voltage control circuit according to another embodiment;
FIG. 9 is a schematic flowchart of a switch drive voltage control method according to an embodiment;
FIG. 10 is a schematic flowchart of a switch drive voltage control method according to another embodiment;
FIG. 11 is a diagram showing an internal structure of a computer device according to an embodiment.

### DETAILED DESCRIPTION OF THE EMBODIMENTS

To make the objectives, technical solutions, and advantages of the present application clearer and better understood, the present application will be further described in detail below with reference to the accompanying drawings and embodiments. It should be understood that the specific embodiments described herein are merely used to explain the present application and are not intended to limit the present application.

Unless otherwise defined, all technical and scientific terms used herein have the same meaning as commonly understood by those of ordinary skill in the art to which the present application belongs. The terms used in the specification of the present application herein are only for the purpose of describing specific embodiments and are not intended to limit the present application.

It can be understood that the terms "first", "second", etc., used in the present application, may be used herein to describe various elements, but these elements are not limited by these terms. These terms are only used to distinguish one element from another. For example, without departing from the scope of the present application, a first resistor may be referred to as a second resistor, and similarly, and a second resistor may be referred to as a first resistor. Both the first resistor and the second resistor are resistors, but they are not the same resistor.

It can be understood that if there are transmissions of electrical signals or data between circuits, modules, units, etc., that are "connected" in the following embodiments, the "connection" should be understood as "electrical connection", or "communication connection", etc.

It can be understood that the term "based on" as used in the present application is used to describe one or more factors that influence a determination and does not exclude other factors that may influence the determination. For example, the phrase "determining *A* based on *B*" means that the determination of *A* may be based entirely on or at least in part on factor *B*, that is, *B* is a factor that influences the determination of *A*, but does not exclude that the determination of *A* may also be based on *C*.

As used herein, the singular forms "a", "an", and "the" may also include the plural forms unless the context clearly dictates otherwise. It can also be understood that the terms "comprising/including" or "having", etc., specify the presence of stated features, integers, steps, operations, components, parts, or combinations thereof, but do not preclude the possibility of the presence or addition of one or more other features, integers, steps, operations, components, parts, or combinations thereof. Moreover, the term "and/or" used in this specification includes any and all combinations of the associated listed items.

A switch drive voltage control circuit provided in an embodiment of the present application is used in a power converter where switching transistors are actively driven. Exemplarily, the power converter is a DC-AC converter using a Dual Active Bridge (DAB) topology. The DC-AC converter using a DAB is a power conversion topology with the DAB, which includes eight power transistors, where four switching transistors constitute a DC-side full-bridge circuit, and the other four switching transistors constitute an AC-side half-bridge circuit.

The switching transistors may also be referred to as power transistors. The switching transistors involved in the embodiments of the present application are voltage-driven conduction switching transistors, including but not limited to Metal-Oxide-Semiconductor Field-Effect Transistors (MOS transistors) and Insulated Gate Bipolar Transistors (IGBTs).

The principle, on which the switching transistor drive voltage control circuit provided in the embodiment is based, is introduced first, so as to clearly understand the present solution.

Taking a MOS transistor as an example, when a gate drive voltage reaches a turn-on threshold of the MOS transistor, the MOS transistor can turn on. Within the tolerance range of the MOS transistor, the higher the gate drive voltage is, the smaller the conduction impedance of the MOS transistor is, and the smaller the corresponding conduction loss of the MOS transistor is. However, a higher drive voltage does not also require the drive circuit of the MOS transistor to provide more energy, thus causing a larger drive loss of the MOS transistor. Through extensive experimental research, the Applicant has found that the conduction loss of a MOS transistor becomes more pronounced when the output power (i.e., the output current) of the power converter is larger, and the drive loss becomes more pronounced when the switching frequency is higher.

In a power converter with actively driven switching transistors, the control logic of the power converter determines that: the larger the magnitude of the AC-side voltage is, the larger the instantaneous power of the power converter is, and the lower the switching frequency of the switching transistors. When the AC-side voltage is near a peak point, the output power of the power converter is relatively high, and the switching frequency of the MOS transistors is relatively low. When the AC-side voltage is near a zero-crossing point, the output power of the power converter is relatively low and the switching frequency of the MOS transistors is relatively high. Taking a micro-inverter based on a DAB topology in a grid-connected operating state as an example: near the peak point of the grid voltage, the switching frequency of each MOS transistor in the micro-inverter is relatively low, while the output power of the power converter is higher; near the zero-crossing point of the grid voltage, the switching frequency of each MOS transistor in the inverter is relatively high, and the output power of the power converter is lower. That is, within an AC cycle, the switching frequency of each of the MOS transistors is negatively correlated with the absolute value of the AC-side voltage, and the operating current of each of the MOS transistors is positively correlated with the absolute value of the AC-side voltage.

Based on this, the present application provides a switching transistor drive voltage control circuit through the following embodiments. If the drive voltage is increased when the magnitude of the AC-side voltage is relatively high, at this time the switching frequency of the MOS transistor is relatively low, so that the drive loss is not pronounced, and the conduction current is relatively high so that the conduction loss is relatively pronounced. Combined with the characteristics that a higher drive voltage leads to a smaller conduction loss and a larger drive loss, the overall loss of the MOS transistor is relatively small at this time, and the efficiency of the power converter is relatively high. If the drive voltage is decreased when the magnitude of the AC-side voltage is relatively low, at this time, the switching frequency of each of the MOS transistors is relatively high so that the drive loss is relatively pronounced, and the conduction current is relatively small so that the conduction loss is not pronounced. Combined with the characteristics that a lower drive voltage leads to a larger conduction loss and a smaller drive loss, the overall loss of the MOS transistors is relatively small at this time, and the efficiency of the power converter is relatively high. In this way, the conduction loss and drive loss of the MOS transistors are dynamically reduced, the overall loss of the power conversion circuit is reduced, and the efficiency of the power converter is ultimately improved.

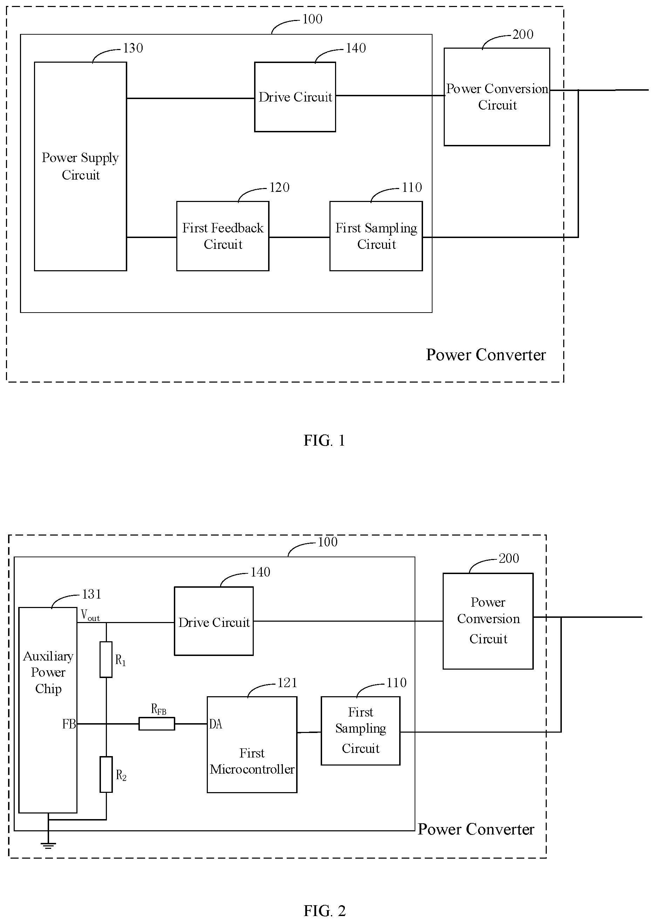

In an exemplary embodiment, a switching transistor drive voltage control circuit 100 is provided and configured to be connected to each switching transistor in a power conversion circuit. Referring to FIG. 1, the switching transistor drive voltage control circuit 100 includes: a first sampling circuit 110, a first feedback circuit 120, a power supply circuit 130 and a drive circuit 140.

The first sampling circuit 110 is configured to perform a sampling process on an alternating (AC)-side voltage of the power conversion circuit to obtain a target sample voltage.

Exemplarily, the AC side of the power converter may be connected to a power grid, and the AC-side voltage is a grid voltage. Exemplarily, the AC side of the power converter may also be connected to an AC load, and the AC-side voltage is a load voltage.

Exemplarily, the first sampling circuit 110 may include a current transformer and a resistor, and is configured to sample an AC-side current according to a ratio of 1:N, and then convert the AC-side current into a target sample voltage through the resistor, where N represents a transformation ratio of the current transformer. In another example, the first sampling circuit 110 may include a voltage sampling chip.

The first feedback circuit 120 is configured to perform processing based on the target sample voltage according to a first mapping relationship to obtain a target feedback voltage. The first mapping relationship includes that a magnitude of a feedback voltage corresponding to a first sample voltage is not greater than a magnitude of a feedback voltage corresponding to a second sample voltage, wherein a magnitude of the first sample voltage is greater than a magnitude of the second sample voltage. The power supply circuit 130 is configured to output a target power supply voltage based on the target feedback voltage, and a relationship between a magnitude of the target power supply voltage and a magnitude of the target feedback voltage is a negative correlation. The drive circuit 140 is configured to output a target drive voltage for driving conduction of a corresponding switching transistor based on the target power supply voltage, and a switching frequency of the switching transistor varies with a magnitude of the AC-side voltage. Specifically, the larger the magnitude of the AC-side voltage is, the greater the instantaneous power of the power conversion circuit is, and the lower the switching frequency is. The drive circuit 140 is connected to a power conversion circuit 200 in the power converter to provide a drive voltage for each switching transistor in the power conversion circuit 200. Exemplarily, the power conversion circuit 200 is a DAB topology circuit.

Exemplarily, the drive circuit 140 may be connected to a programmable logic device in the power converter to control the switching frequency of each switching transistor.

An input terminal of the first feedback circuit 120 is connected to the first sampling circuit 110, and an output terminal of the first feedback circuit 120 is connected to a feedback input terminal of the power supply circuit 130, so that the power supply circuit 130 can adjust an output voltage of the power supply circuit 130 based on an output of the first feedback circuit 120.

The target feedback voltage is obtained by performing the processing based on the target sample voltage according to the first mapping relationship. A changing trend of the target feedback voltage is opposite to that of the target sample voltage, that is, the larger the magnitude of the sample voltage is, the smaller the magnitude of the feedback voltage is. The relationship between the magnitude of the target power supply voltage and the magnitude of the target feedback voltage is a negative correlation, that is, the smaller the target feedback voltage is, the larger the target power supply voltage is. In this way, via the first feedback circuit 120 and the power supply circuit 130, the magnitude of the target power supply voltage input to the drive circuit 140 is positively correlated with the magnitude of the target sample voltage, so that the magnitude of the target drive voltage output from the drive circuit 140 to each switching transistor is positively correlated with the magnitude of the target sample voltage. Thus, when the magnitude of the AC-side voltage is relatively large, the drive voltage of the switching transistor is relatively large, and when the magnitude of the AC-side voltage is relatively small, the drive voltage of the switching transistor is relatively low, thereby dynamically reducing the conduction loss and the drive loss of the MOS transistor.

The first sample voltage and the second sample voltage refer to any two voltages with different magnitudes that the first sampling circuit 110 can output, where the first sample voltage refers to a sample voltage with a larger magnitude, and the second sample voltage refers to a sample voltage with a smaller magnitude. In the embodiments of the present application, the first sample voltage and the second sample voltage are used to illustrate a mapping relationship between the sample voltage and the feedback voltage included in the first mapping relationship.

In an embodiment, the first mapping relationship includes that the magnitude of the feedback voltage is linearly related to the magnitude of the sample voltage. In the embodiment, the first mapping relationship includes that a magnitude of a feedback voltage corresponding to a first sample voltage is smaller than a magnitude of a feedback voltage corresponding to a second sample voltage, wherein a magnitude of the first sample voltage is greater than a magnitude of the second sample voltage, that is, the first mapping relationship means that the larger the sample voltage is, the smaller the magnitude of the feedback voltage is.

Exemplarily, the first mapping relationship is: *V*ₒ=*A*-*B**|*V*_{ac}|, where *V*ₒ represents the feedback voltage, *V*_{ac} represents the sample voltage, and *A* and *B* are preset mapping parameters. Exemplarily, *A* = 2.35 and *B* = 0.00163. In this embodiment, the mapping parameters A and B are obtained by the Applicant through debugging according to hardware parameters of the power supply circuit used in experiments, electrical characteristics of the switching transistors, and actual experimental effects, and are not intended to limit the mapping parameters. It can be understood that a person skilled in the art can perform debugging to determine the mapping parameters according to specific embodiments including, but not limited to, the hardware parameters of the power supply circuit and/or the electrical characteristics of the switching transistors.

In an embodiment, the first mapping relationship includes that the magnitude of the feedback voltage is non-linearly related to the magnitude of the sample voltage. In the embodiment, the magnitude of the sample voltage is divided into a plurality of magnitude intervals, where each magnitude interval corresponds to a different feedback voltage, and sample voltages within the same magnitude interval correspond to the same feedback voltage; and as a whole, the sample voltage and the feedback voltage are negatively correlated. Exemplarily, the first mapping relationship includes a piecewise function. Also exemplarily, the first mapping relationship includes a tabular mapping relationship.

In an embodiment, the first feedback circuit 120 is implemented using a pure hardware circuit. In another embodiment, the first feedback circuit 120 includes a first microcontroller 121, i.e., it is implemented through a combination of software and hardware. The full English name of the abbreviated MCU is Microcontroller Unit.

The power supply circuit 130 adjusts the output power supply voltage according to the input feedback voltage. The larger the magnitude of the input feedback voltage is, the smaller the magnitude of the output power supply voltage is, and the smaller the magnitude of the input feedback voltage is, the larger the magnitude of the output power supply voltage is. The power supply voltage refers to the power supply voltage input to the drive circuit 140.

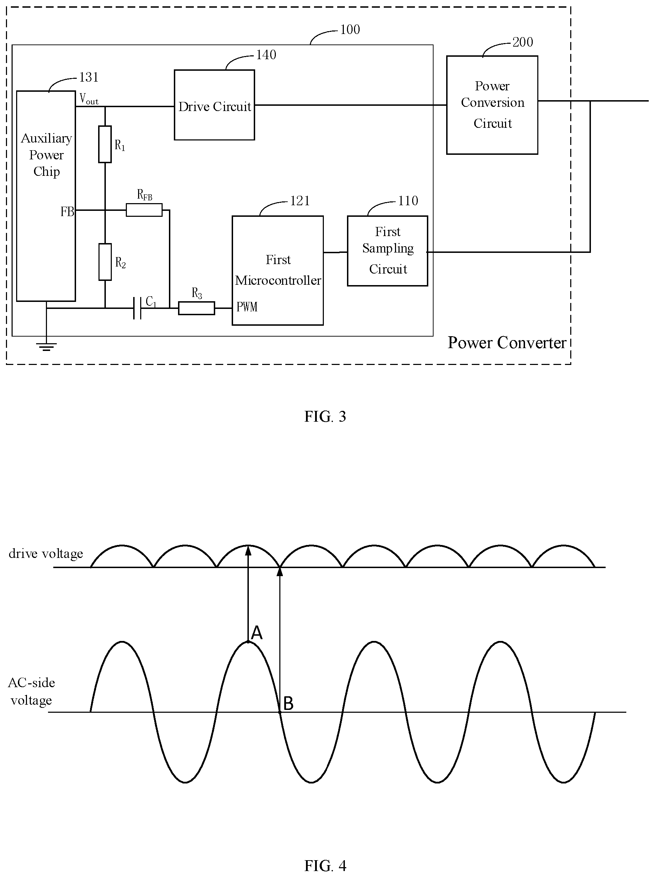

In an embodiment, referring to FIG. 2 and FIG. 3, the power supply circuit 130 includes an auxiliary power chip 131 having a voltage feedback characteristic, and a peripheral circuit corresponding to the auxiliary power chip 131. As shown in FIG. 2 and FIG. 3, Vₒᵤₜ represents the power supply voltage output by the power supply circuit 130, Vₒ represents the feedback voltage, and FB represents a feedback pin of the auxiliary power chip 131. Referring to FIG. 2 and FIG. 3, the peripheral circuit includes a first resistor R₁, a second resistor R₂, and a third resistor R_{FB}. An output terminal of the auxiliary power chip 131 is connected to a first terminal of the first resistor R₁. A feedback input terminal of the auxiliary power chip 131 is connected to a second terminal of the first resistor R₁, a first terminal of the second resistor R₂, and a first terminal of the third resistor R_{FB}. A second terminal of the second resistor R₂ is grounded, and a second terminal of the third resistor R_{FB} is connected to the output terminal of the first feedback circuit 120.

The power supply voltage Vₒᵤₜ output by the power supply circuit 130 is regulated and controlled by the feedback pin voltage thereof, and can provide a gate drive voltage for each of the MOS transistors through the drive circuit 140.

Exemplarily, the auxiliary power chip 131 is a BUCK (step-down) power supply chip.

The switching transistor drive voltage control circuit 100 provided in the above embodiments is configured to connect to each switching transistor in the power converter, and includes: the first sampling circuit 110, the first feedback circuit 120, the power supply circuit 130, and the drive circuit 140. The first sampling circuit 110 is configured to perform the sampling process on the AC-side voltage of the power conversion circuit to obtain the target sample voltage. The first feedback circuit 120 is configured to perform the processing based on the target sample voltage according to the first mapping relationship to obtain the target feedback voltage. The first mapping relationship includes that the magnitude of the feedback voltage corresponding to the first sample voltage is not greater than the magnitude of the feedback voltage corresponding to the second sample voltage, wherein the magnitude of the first sample voltage is greater than the magnitude of the second sample voltage. The power supply circuit 130 is configured to output the target power supply voltage based on the target feedback voltage, and the relationship between the magnitude of the target power supply voltage and the magnitude of the target feedback voltage is the negative correlation. The drive circuit 140 is configured to output the target drive voltage for driving conduction of the corresponding switching transistor based on the target power supply voltage. The switching frequency of the switching transistor varies with the magnitude of the AC-side voltage. In this way, by sampling the AC-side voltage of the power conversion circuit, performing the first process through the first feedback circuit 120 to obtain the feedback voltage that is overall negatively correlated with the sample voltage, and then a second process is performed based on the target feedback voltage using the power supply circuit 130 having a feedback voltage control function, to obtain the target power supply voltage that is negatively correlated with the target feedback voltage. Thus, a positive correlation between the magnitude of the drive voltage and the magnitude of the AC-side voltage of the power conversion circuit is established through the first sampling circuit 110, the first feedback circuit 120, and the power supply circuit 130, so that the target drive voltage output by the drive circuit 140 for driving the switching transistor can be dynamically adjusted in a positive correlation with the magnitude of the AC-side voltage, thereby dynamically reducing the drive loss and the conduction loss, and improving the conversion efficiency of the power converter.

Exemplarily, the switching transistor drive voltage control circuit 100 provided in the above embodiments is applied to a grid-connected operation process of the micro-inverter based on the DAB topology structure. Referring to FIG. 4, at a peak point *A* of the grid voltage, the switching frequency of a switching transistor is relatively low, the output current is large, and the conduction loss is dominant, therefore the drive voltage is increased to reduce the conduction loss. At a zero-crossing point *B* of the grid voltage, the switching frequency of the MOS transistor is high, the output current of the micro-inverter is small, and the drive loss is dominant, therefore, the drive voltage is decreased to reduce the drive loss.

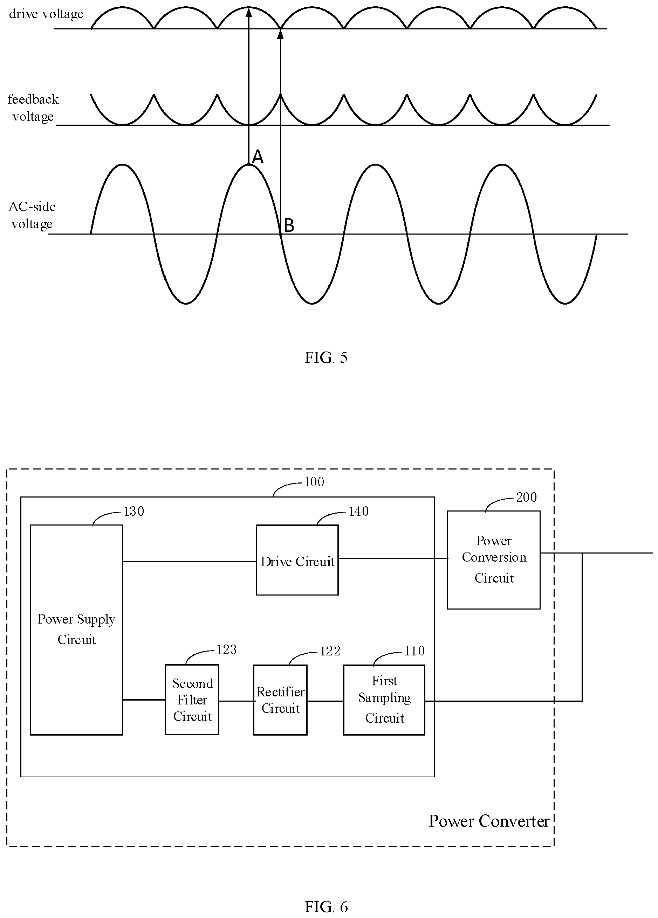

Referring to FIG. 5, an illustrative schematic diagram showing changing trends of the AC-side voltage, the feedback voltage, and the drive voltage, when the first mapping relationship is the non-linear relationship, the waveforms of the feedback voltage and the drive voltage may be step-shaped, and the changing trend of the feedback voltage is opposite to the changing trend of the magnitude of the AC-side voltage.

In an exemplary embodiment, referring to FIG. 2 and FIG. 3, based on the embodiment shown in FIG. 1, the first feedback circuit 120 in the provided switching transistor drive voltage control circuit 100 includes a first microcontroller 121. An input terminal of the first microcontroller 121 is connected to an output terminal of the first sampling circuit 110, and an output terminal of the first microcontroller 121 is connected to the feedback input terminal of the power supply circuit 130.

In an embodiment, referring to FIG. 2, the output terminal of the first microcontroller 121 includes a digital-to-analog output terminal of the first microcontroller 121, i.e., a digital-to-analog (DA) pin. In the embodiment, the first microcontroller 121 is configured to perform the processing based on the target sample voltage according to the first mapping relationship, and output the target feedback voltage through the DA output terminal. The target feedback voltage is an analog signal.

In the embodiment, the DA pin on the first microcontroller 121 is configured to directly output the target feedback voltage in the form of an analog signal, thereby eliminating the need for an additional filter circuit, reducing a hardware cost and simplifying the circuit topology.

In an embodiment, referring to FIG. 3, the output terminal of the first microcontroller 121 includes a duty cycle output terminal, and the first feedback circuit 120 further includes a first filter circuit. An input terminal of the first filter circuit is connected to the duty cycle output terminal, and an output terminal of the first filter circuit is connected to the input terminal of the first feedback circuit 120. The first microcontroller 121 is configured to perform the processing based on the target sample voltage according to the first mapping relationship, and output a first duty cycle voltage through the duty cycle output terminal. The first filter circuit is configured to perform a filtering process on the first duty cycle voltage to obtain the target feedback voltage.

Exemplarily, referring to FIG. 3, the first filter circuit includes a resistor-capacitor (RC) filter circuit. As shown in FIG. 3, the first filter circuit includes a resistor R₃ and a capacitor C₁.

Exemplarily, the duty cycle output terminal of the first microcontroller 121 may be a General Purpose Input Output (GPIO) pin of the first microcontroller 121. Also exemplarily, the duty cycle output terminal of the first microcontroller 121 may be a Pulse Width Modulator (PWM) output pin of the first microcontroller 121, as shown in FIG. 3.

The first duty cycle voltage output by the duty cycle output terminal is in a form of a PWM wave, i.e., in the form of a digital signal, and is converted into the target feedback voltage in the form of an analog signal by the first filter circuit.

In the embodiment, the first duty cycle voltage in the form of the digital signal is first output from the duty cycle output terminal of the first microcontroller 121, and then is filtered into the target feedback voltage in an analog form by the first filter circuit, which can reduce the resource consumption of the first microcontroller 121 and avoid insufficient DA pin resources on the first microcontroller 121. Furthermore, the switching transistor drive voltage control circuit 100 provided in the embodiment can be implemented using a first microcontroller 121 that does not have a DA pin, thereby improving the flexibility of the solution's application.

In the switching transistor drive voltage control circuit 100 provided in the above embodiment, the first feedback circuit 120 is implemented based on the first microcontroller 121. The first microcontroller 121 can read the real-time state of the AC-side voltage of the power converter through the first sampling circuit 110, and is connected to the feedback input terminal of the power supply circuit 130 to input a feedback voltage into the power supply circuit 130, thereby adjusting the power supply voltage output by the power supply circuit 130. In the embodiment, the mapping from the sample voltage to the feedback voltage is implemented through a combination of the first microcontroller 121 and software, which features high precision. Specific parameters in the first mapping relationship can be flexibly adjusted according to the hardware parameters of the switching transistors in the power conversion part of the power converter or hardware parameters corresponding to the power supply circuit 130. The switching transistor drive voltage control circuit 100 provided in the embodiment has good scalability.

In an embodiment of this embodiment, the target drive voltage can be automatically adjusted by the first microcontroller 121 to find the highest efficiency point. Exemplarily, based on the waveform of the target power supply voltage currently output by the drive circuit 140, a corresponding closed-loop control algorithm is set in the first microcontroller 121 to calculate the current efficiency of the power converter, allowing the drive voltage to find the optimal target drive voltage on its own within a safe range; for example, the maximum magnitude and the minimum magnitude of the drive voltage waveform in FIG. 4 can be adjusted. The straight line in FIG. 4 does not represent an axis where the voltage is 0.

In an implementation of an embodiment, the first mapping relationship includes a first mapping relationship *A* and a first mapping relationship *B*, which correspond to different switching transistors, respectively. It can be understood that mapping parameters in the first mapping relationship *A* and in the first mapping relationship *B* are determined based on the electrical characteristics of different switching transistors. The first feedback circuit 120 based on the first microcontroller 121 can determine, based on the characteristics of the AC-side voltage, whether to switch the mapping relationship currently required to be used between the first mapping relationship A and the first mapping relationship B. Alternatively, the first feedback circuit 120 based on the first microcontroller 121 can switch the mapping relationship currently to be used in response to a user's input. Furthermore, the first mapping relationship may include various first mapping relationships, and the first microcontroller 121 is configured to switch to a desired mapping relationship during a specific usage, thereby improving the scalability of the switching transistor drive voltage control circuit.

In an implementation of an embodiment, during the process of performing the processing based on the target sample voltage according to the first mapping relationship to obtain the target feedback voltage, the first microcontroller 121 is specifically configured to: obtain an initial feedback voltage based on the target sample voltage and the first mapping relationship; when a magnitude of the initial feedback voltage is greater than or equal to a preset feedback voltage threshold, use the initial feedback voltage as the target feedback voltage; and when the initial feedback voltage is greater than the preset feedback voltage threshold, obtain the target feedback voltage based on the preset feedback voltage threshold. In this way, when the AC-side voltage increases abnormally, such as during a high-voltage ride-through (HVRT) or cumulative surges of the grid voltage, the target feedback voltage output by the first feedback circuit 120 will not be excessively small, and the target power supply voltage output by the power supply circuit 130 will not be excessively large, which is equivalent to setting an upper limit for the drive voltage of each switching transistor, thereby improving the safety of circuit operation.

In an exemplary embodiment, referring to FIG. 6, the first feedback circuit 120 in the provided switch drive voltage control circuit includes a rectifier circuit 122 and a second filter circuit 123. The rectifier circuit 122 is configured to perform a rectification and phase-shifting process on the target sample voltage to obtain a rectified voltage. The second filter circuit 123 is configured to perform filtering and amplification processing on the rectified voltage to obtain the target feedback voltage.

Exemplarily, the rectifier circuit 122 includes a full-bridge rectifier circuit composed of four diodes, and includes a phase-shift circuit.

The full-bridge rectifier circuit rectifies the target sample voltage to obtain a waveform whose magnitude variation is identical to that of the AC-side voltage. In order to obtain a rectified voltage whose changing trend is opposite to that of the AC-side voltage, the phase-shift circuit shifts the phase of the rectified voltage by 180° or an integer multiple of 180°.

Exemplarily, the second filter circuit 123 includes an RC filter circuit and an amplifier circuit. The RC filter circuit performs filtering and smoothing processing on the rectified voltage to obtain a filtered voltage with an analog signal waveform, and the amplifier circuit performs an amplification process on the filtered voltage to adjust the magnitude of the filtered voltage, thereby obtaining the target feedback voltage determined by the first mapping relationship. An amplification factor of the amplifier circuit may be greater than 1 or less than 1. Exemplarily, the amplification factor may be determined based on the electrical parameter characteristics of the auxiliary power chip adopted by the power supply circuit 130, of the rectifier circuit 122, and of the switching transistors.

In an embodiment, in addition to the full-bridge rectifier circuit and the phase-shift circuit, the rectifier circuit 122 further includes an isolation circuit. An input terminal of the isolation circuit is connected to the output terminal of the first sampling circuit 110, and an output terminal of the isolation circuit is connected to the full-bridge rectifier circuit. Exemplarily, the isolation circuit includes two phase inverters connected in series.

In the embodiment, adopting the isolation circuit can prevent mutual interference between the first sampling circuit 110 and the rectifier circuit 122, thereby improving the operational reliability of the switch drive voltage control circuit.

In an exemplary embodiment, the first feedback circuit 120 includes a step-down circuit, a rectifier circuit, and a filter circuit. The magnitude of the AC-side voltage of the power converter is generally in a range from 0 V to 390 V. When the magnitude is relatively large, in this embodiment, the sampled target AC voltage is first subjected to a step-down process via the step-down circuit to obtain a stepped-down voltage, and then is subjected to the rectification process, the phase-shifting process, and the filtering process.

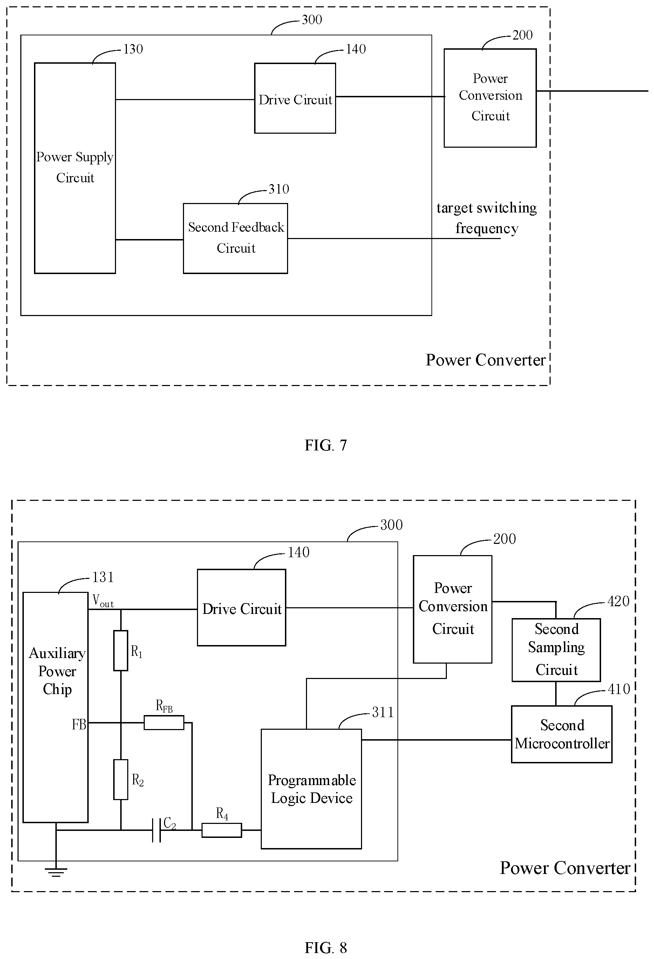

In an exemplary embodiment, referring to FIG. 7, a switching transistor drive voltage control circuit 300 is provided and configured to connect to each switching transistor in the power conversion circuit 200. As shown in FIG. 7, the switching transistor drive voltage control circuit 300 includes a second feedback circuit 310, the power supply circuit 130, and the drive circuit 140. It can be understood that the switching transistor drive voltage control circuit 300 provided in this embodiment adopts a different feedback circuit topology but the same power supply circuit topology and drive circuit topology as the switching transistor drive voltage control circuit 100 provided in the above embodiments.

The second feedback circuit 310 is configured to obtain a target switching frequency of a switching transistor, and process the target switching frequency according to the second mapping relationship to obtain a target feedback voltage. The second mapping relationship includes that a magnitude of a feedback voltage corresponding to a first switching frequency is not less than a magnitude of a feedback voltage corresponding to a second switching frequency, wherein the first switching frequency is greater than the second switching frequency. The switching frequency of the switching transistor varies with the magnitude of the AC-side voltage of the power conversion circuit. Specifically, the larger the magnitude of the AC-side voltage is, the greater the instantaneous power of the power conversion circuit, and the lower the switching frequency. The power supply circuit 130 is configured to output the target power supply voltage based on the target feedback voltage. A relationship between the magnitude of the target power supply voltage and the magnitude of the target feedback voltage is a negative correlation. The drive circuit 140 is configured to output the target drive voltage based on the target power supply voltage to drive conduction of the switching transistor.

In an embodiment, the second mapping relationship includes that the switching frequency is linearly related to the magnitude of the sample voltage. In the embodiment, the second mapping relationship includes that the magnitude of the feedback voltage corresponding to the first switching frequency is greater than the magnitude of the feedback voltage corresponding to the second switching frequency, that is, the second mapping relationship means that the lower the switching frequency is, the smaller the magnitude of the feedback voltage is.

In an embodiment, the second mapping relationship includes that the switching frequency is non-linearly related to the magnitude of the sample voltage. In the embodiment, the switching frequency is divided into a plurality of frequency intervals according to numerical values, the frequency intervals correspond to different feedback voltages, respectively, and the switching frequencies within the same frequency interval correspond to the same feedback voltage. In the embodiment, there is a case where the switching frequency changes while the magnitude of the feedback voltage remains unchanged. As a whole, the switching frequency and the feedback voltage exhibit a positively correlated mapping relationship. Exemplarily, the second mapping relationship includes a piecewise function. Also exemplarily, the second mapping relationship includes a tabular mapping relationship.

In the embodiment, the switching frequency of each switching transistor in the power conversion circuit 200 varies with the magnitude of the AC-side voltage of the power conversion circuit. When the magnitude of the AC-side voltage is relatively large, the switching frequency of the switching transistor is relatively low, for example, near a peak value of the AC-side voltage, the switching frequency of the switching transistor is the lowest. When the magnitude of the AC-side voltage is relatively small, the switching frequency of the switching transistor is relatively high, for example, near the zero-crossing point of the AC-side voltage, the switching frequency of the switching transistor is the highest. Based on this, in this embodiment, the magnitude of the drive voltage of the switching transistor is directly adjusted according to the switching frequency of the switching transistor. That is, the second feedback circuit 310 directly obtains the switching frequency configured to control the switching transistor, outputs a feedback voltage according to the switching frequency, and regulates the power supply voltage output by the power supply circuit 130, so that the drive voltage output by the drive circuit 140 varies with the switching frequency of the switching transistor. The second feedback circuit 310 performs a first process on the switching frequency to obtain a feedback voltage positively correlated with the switching frequency, and then the power supply circuit 130, having the feedback voltage control function, performs a second process based on the feedback voltage to obtain a power supply voltage negatively correlated with the feedback voltage. A negative correlation between the drive voltage and the switching frequency of the switching transistor of the power conversion circuit is established through the second feedback circuit 310 and the power supply circuit 130, so that the target drive voltage output by the drive circuit 140 for driving the switching transistor can be dynamically adjusted in a negative correlation with the switching frequency of the switching transistor, thereby dynamically reducing the drive loss and the conduction loss, and improving the conversion efficiency of the power converter.

In an exemplary embodiment, based on the embodiment shown in FIG. 7, referring to FIG. 8, the second feedback circuit includes a programmable logic device 311 and a third filter circuit. An output terminal of the third filter circuit is connected to a digital output terminal of the programmable logic device, and an output terminal of the third filter circuit is connected to the feedback input terminal of the power supply circuit 130.

The programmable logic device 311 is configured to obtain the target switching frequency, process the target switching frequency according to the second mapping relationship, and output a second duty cycle voltage through the digital output terminal. The programmable logic device 311 is further configured to perform a process based on the AC-side voltage of the power conversion circuit to obtain the switching frequency of the switching transistor.

Exemplarily, the programmable logic device 311 is implemented using a complex programmable logic device (CPLD). Also exemplarily, the programmable logic device 311 is implemented using a field programmable gate array (FPGA).

In an embodiment, referring to FIG. 8, an input terminal of the programmable logic device 311 is configured to be connected to an output terminal of the second microcontroller 410, an input terminal of the second microcontroller 410 is connected to an output terminal of the second sampling circuit 420, and an input terminal of the second sampling circuit 420 is connected to an AC-side output terminal of the power conversion circuit 200 to sample the AC-side voltage of the power conversion circuit 200. The second microcontroller 410 is configured to process the AC-side voltage output by the second sampling circuit 420 and output the AC-side voltage in the form of a digital signal, so that the programmable logic device 311 can process the AC-side voltage in the form of the digital signal, to obtain the switching frequency of the switching transistor.

The third filter circuit is configured to perform a filtering process on the second duty cycle voltage to obtain the target feedback voltage. In an embodiment, the third filter circuit has the same topological structure as the first filter circuit, adopting the RC filter circuit. As shown in FIG. 8, the third filter circuit includes a resistor R₄ and a capacitor C₂. In the embodiment, the third filter circuit converts the second duty cycle voltage output by the digital output terminal of the programmable logic device 311 into the target feedback voltage in the form of an analog signal.

In the switching transistor drive voltage control circuit provided in the embodiment above, the second feedback circuit is implemented using the third filter circuit, and the programmable logic device 311 that calculates the switching frequency. There is no need to configure a sampling circuit and a processing device for the second feedback circuit, thereby simplifying the circuit structure and improving the processing efficiency of the second feedback circuit.

In an exemplary embodiment, the second feedback circuit 310 includes a third microcontroller. The third microcontroller is configured to obtain the switching frequency of the switching transistor. Exemplarily, the third microcontroller is configured to connect to an output terminal of the programmable logic device. In the embodiment, the programmable logic device is configured to determine the switching frequency of the switching transistor based on the AC-side voltage, and the output terminal of the programmable logic device is connected to each switching transistor in the power conversion circuit as well as to an input terminal of the third microcontroller.

In some embodiments, the output terminal of the third microcontroller includes a digital-to-analog output terminal, and the digital-to-analog output terminal of the third microcontroller is connected to the feedback input terminal of the power supply circuit 130. The third microcontroller is configured to perform the processing on the target switching frequency according to the second mapping relationship, and output the target feedback voltage through the digital-to-analog output terminal.

In an implement of an embodiment, the third microcontroller and the second microcontroller in FIG. 8 are the same controller.

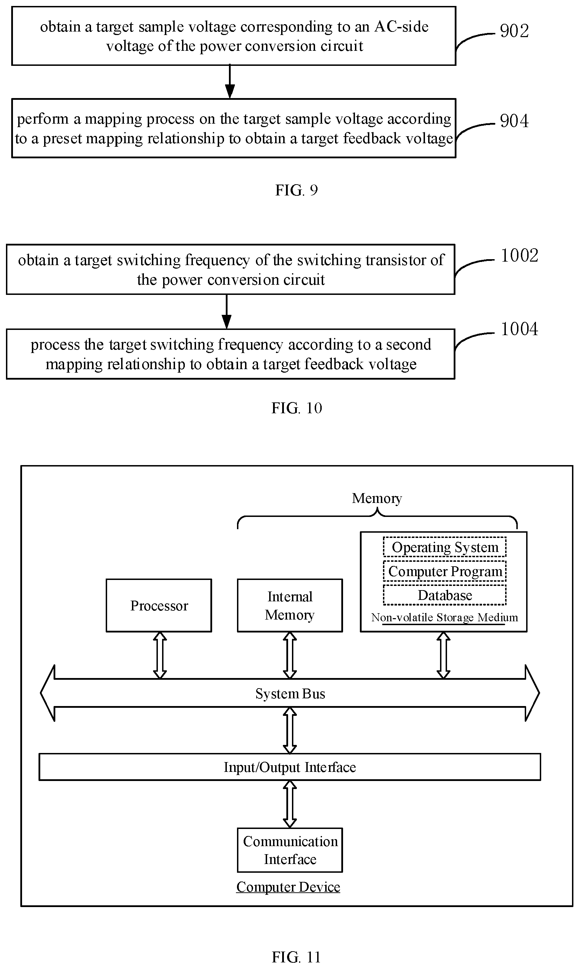

In an exemplary embodiment, a switching transistor drive voltage control method is provided. This embodiment is described by taking the method applied to the first microcontroller 121 shown in FIGS. 2 to 3 as an example. It can be understood that the method provided in this embodiment can also be applied to any other controller or computer device, which is connected to the power supply circuit 130 and the first sampling circuit 110. Referring to FIG. 9, the method includes step 902 to step 904.

In Step 902, obtain a target sample voltage corresponding to an AC-side voltage of the power conversion circuit.

Exemplarily, a real-time sample voltage corresponding to the AC-side voltage of the power conversion circuit is obtained through the first sampling circuit 110 connected to the first microcontroller 121.

In Step 904, perform a mapping process on the target sample voltage according to a first mapping relationship to obtain a target feedback voltage.

The first mapping relationship includes that a magnitude of a feedback voltage corresponding to a first sample voltage is not greater than a magnitude of a feedback voltage corresponding to a second sample voltage, wherein a magnitude of the first sample voltage is greater than a magnitude of the second sample voltage.

The target feedback voltage is used for determining a target drive voltage based on the target feedback voltage to drive conduction of the switching transistor. A relationship between a magnitude of the target drive voltage and a magnitude of the target feedback voltage is a negative correlation, and the switching frequency of the switching transistor varies with the magnitude of the AC-side voltage.

In an exemplary embodiment, based on the embodiment shown in FIG. 9, this embodiment relates to a process of performing the mapping process on the target sample voltage according to the first mapping relationship to obtain the target feedback voltage, including: performing the processing based on the target sample voltage according to the first mapping relationship to obtain a magnitude of the target feedback voltage; obtaining a first duty cycle voltage based on the magnitude of the target feedback voltage; and performing a filtering process on the first duty cycle voltage to obtain the target feedback voltage.

In an exemplary embodiment, a switching transistor drive voltage control method is provided. This embodiment is described by taking the method applied to the second feedback circuit 310 shown in FIG. 8 as an example. It can be understood that the method provided in this embodiment can also be applied to any other circuit or computer device, which is capable of calculating or acquiring the switching frequency of the switching transistor and is connected to the power supply circuit. Referring to FIG. 10, the method includes step 1002 and step 1004.

In Step 1002, obtain a target switching frequency of the switching transistor of the power conversion circuit.

Exemplarily, the programmable logic device 311 performs a calculation process based on the AC-side voltage to obtain the target switching frequency of the switching transistor.

In Step 1004, process the target switching frequency according to a second mapping relationship to obtain a target feedback voltage. The second mapping relationship includes that a magnitude of a feedback voltage corresponding to a first switching frequency is not less than a magnitude of a feedback voltage corresponding to a second switching frequency, wherein the first switching frequency is greater than the second switching frequency.

The target feedback voltage is configured to determine a target drive voltage based on the target feedback voltage to drive conduction of the switching transistor, a relationship between a magnitude of the target drive voltage and the magnitude of the target feedback voltage is a negative correlation, and the switching frequency of the switching transistor varies with a magnitude of the AC-side voltage of the power conversion circuit.

In some embodiments, the target switching frequency can be processed according to the second mapping relationship through the programmable logic device 311 to obtain the magnitude of the target feedback voltage; a second duty cycle voltage is obtained based on the magnitude of the target feedback voltage; and the second duty cycle voltage is subjected to a filtering process through the third filter circuit to obtain the target feedback voltage.

In an exemplary embodiment, a computer device is provided. The computer device may be the first microcontroller 121 in the power converter, or the programmable logic device 311 in the power converter, or the third microcontroller. An internal structure diagram of the computer device may be as shown in FIG. 11. The computer device includes a processor, a memory, an input/output (I/O) interface, and a communication interface. The processor, the memory, and the input/output interface are connected through a system bus, and the communication interface is connected to the system bus through the input/output interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for the operation of the operating system and the computer program in the non-volatile storage medium. The database of the computer device is configured to store data required to be stored and called when executing a pole welding control method. The input/output interface of the computer device is used for exchanging information between the processor and an external device. The communication interface of the computer device is used for communicating with an external terminal via a network connection. The computer program, when executed by the processor, implements at least part of the steps in a switching transistor drive voltage control method.

Those skilled in the art can understand that the structure shown in FIG. 8 is merely a block diagram of part of the structure related to the solution of the present application, and does not constitute a limitation on the computer device to which the solution of the present application is applied. A specific computer device may include more or fewer components than those shown in the figure, or combine certain components, or have a different arrangement of components.

In an embodiment, a computer device is further provided, including a memory and a processor. The memory has a computer program stored thereon, and the processor, when executing the computer program, performs the steps of the method of any one of the embodiments described above.

In an embodiment, a computer-readable storage medium is provided, having a computer program stored thereon. The computer program, when executed by a processor, performs the steps of the method of any one of the embodiments described above.

In an embodiment, a computer program product is provided, including a computer program. The computer program, when executed by a processor, performs the steps of the method of any one of the embodiments described above.

In an exemplary embodiment, a power converter is provided. The power converter includes the switching transistor drive voltage control circuit 100 and the power conversion circuit 200 provided in the above embodiments. The switching transistor drive voltage control circuit 100 is connected to a drive terminal of each of the switching transistors in the power conversion circuit 200.

Those of ordinary skill in the art can understand that all or part of the processes in the methods of the above embodiments can be implemented by instructing relevant hardware through a computer program. The computer program can be stored in a non-transitory computer-readable storage medium. The computer program, when executed, can perform the processes of the method of any one of embodiments described above. Any reference to a memory, database, or other media used in the embodiments provided in the present application may include at least one of non-transitory memory and transitory memory. The non-transitory memory may include Read-Only Memory (ROM), magnetic tape, floppy disk, flash memory, optical memory, high-density embedded non-transitory memory, resistive memory (ReRAM), Magneto resistive Random-Access Memory (MRAM), Ferroelectric Random-Access Memory (FRAM), Phase Change Memory (PCM), graphene memory, and the like. Transitory memory may include Random Access Memory (RAM) or external cache memory, etc. By way of illustration and not limitation, RAM may be in various forms, such as Static Random-Access Memory (SRAM) or Dynamic Random-Access Memory (DRAM), etc. The databases involved in the embodiments provided in the present application may include at least one of relational databases and non-relational databases. Non-relational databases may include distributed databases based on blockchain, etc., but are not limited thereto. The processors involved in the embodiments provided in the present application may be general-purpose processors, central processing units, graphics processors, digital signal processors, programmable logic devices, data processing logic devices based on quantum computing, etc., but are not limited thereto.

The technical features of the embodiments above can be combined arbitrarily. For the sake of brevity, not all possible combinations of the technical features in the embodiments above are described. However, as long as there is no contradiction in the combinations of the technical features, these combinations should be considered to be within the scope of the specification.

The embodiments above are merely several implementations of the present application, and the descriptions thereof are relatively specific and detailed, but should not be construed as limiting the scope of the patent application. It should be noted that, for those of ordinary skill in the art, various variations and improvements can be made without departing from the concept of the present application, and these variations and improvements all fall within the protection scope of the present application. Therefore, the protection scope of the present application should be subject to the appended claims.

## Claims

1. A switching transistor drive voltage control circuit, **characterized in that** the switching transistor drive voltage control circuit is configured to connect to each switching transistor in a power conversion circuit, and the switching transistor drive voltage control circuit comprises: a first sampling circuit, a first feedback circuit, a power supply circuit, and a drive circuit, wherein:
the first sampling circuit is configured to perform a sampling process on an alternating current (AC)-side voltage of the power conversion circuit to obtain a target sample voltage;
the first feedback circuit is configured to perform processing based on the target sample voltage according to a first mapping relationship to obtain a target feedback voltage, wherein the first mapping relationship comprises that a magnitude of a feedback voltage corresponding to a first sample voltage is not greater than a magnitude of a feedback voltage corresponding to a second sample voltage, wherein a magnitude of the first sample voltage is greater than a magnitude of the second sample voltage;
the power supply circuit is configured to output a target power supply voltage based on the target feedback voltage, wherein a relationship between a magnitude of the target power supply voltage and a magnitude of the target feedback voltage is a negative correlation; and
the drive circuit is configured to output a target drive voltage based on the target power supply voltage to drive conduction of each switching transistor, wherein a switching frequency of each switching transistor varies with a magnitude of the AC-side voltage.

2. The switching transistor drive voltage control circuit according to claim 1, wherein the first feedback circuit comprises a first microcontroller, wherein an input terminal of the first microcontroller is connected to an output terminal of the sampling circuit, and an output terminal of the first microcontroller is connected to a feedback input terminal of the power supply circuit.

3. The switching transistor drive voltage control circuit according to claim 2, wherein the output terminal of the first microcontroller is a digital-to-analog (DA) output terminal of the first microcontroller; and
the first microcontroller is configured to perform the processing based on the target sample voltage according to the first mapping relationship, and output the target feedback voltage through the DA output terminal.

4. The switching transistor drive voltage control circuit according to claim 2 or 3, wherein the output terminal of the first microcontroller comprises a duty cycle output terminal; the feedback circuit further comprises a first filter circuit, an input terminal of the first filter circuit is connected to the duty cycle output terminal, and an output terminal of the first filter circuit is connected to the feedback input terminal of the power supply circuit;
the first microcontroller is configured to perform the processing based on the target sample voltage according to the first mapping relationship, and output a first duty cycle voltage through the duty cycle output terminal; and
the first filter circuit is configured to perform a filtering process on the first duty cycle voltage to obtain the target feedback voltage.

5. The switching transistor drive voltage control circuit according to any one of claims 1 to 4, wherein the first mapping relationship comprises that a magnitude of a feedback voltage is linearly related to a magnitude of a sample voltage.

6. The switching transistor drive voltage control circuit according to any one of claims 1 to 5, wherein the first mapping relationship comprises that a magnitude of a feedback voltage is non-linearly related to a magnitude of a sample voltage.

7. The switching transistor drive voltage control circuit according to any one of claims 1 to 6, wherein the first feedback circuit comprises a rectifier circuit and a second filter circuit, wherein:
the rectifier circuit is configured to perform rectification and phase-shifting processing on the target sample voltage to obtain a rectified voltage; and
the second filter circuit is configured to perform filtering and amplification processing on the rectified voltage to obtain the target feedback voltage.

8. The switching transistor drive voltage control circuit according to any one of claims 1 to 7, wherein the power supply circuit comprises an auxiliary power chip, a first resistor, a second resistor, and a third resistor, wherein:
an output terminal of the auxiliary power chip is connected to a first terminal of the first resistor, and a feedback input terminal of the auxiliary power chip is connected to a second terminal of the first resistor, a first terminal of the second resistor, and a first terminal of the third resistor;
a second terminal of the second resistor is grounded; and
a second terminal of the third resistor is connected to an output terminal of the feedback circuit.

9. A switching transistor drive voltage control circuit, **characterized in that** the switching transistor drive voltage control circuit is configured to connect to each switching transistor in a power conversion circuit, and the switching transistor drive voltage control circuit comprises: a second feedback circuit, a power supply circuit, and a drive circuit, wherein:
the second feedback circuit is configured to obtain a target switching frequency of each switching transistor, and process the target switching frequency according to a second mapping relationship to obtain a target feedback voltage, wherein the second mapping relationship comprises that a magnitude of a feedback voltage corresponding to a first switching frequency is not less than a magnitude of a feedback voltage corresponding to a second switching frequency, wherein the first switching frequency is greater than the second switching frequency;
the power supply circuit is configured to output a target power supply voltage based on the target feedback voltage, wherein a relationship between a magnitude of the target power supply voltage and a magnitude of the target feedback voltage is a negative correlation; and
the drive circuit is configured to output a target drive voltage based on the target power supply voltage to drive conduction of each switching transistor, wherein a switching frequency of each switching transistor varies with a magnitude of an AC-side voltage of the power conversion circuit.

10. The switching transistor drive voltage control circuit according to claim 9, wherein the second feedback circuit comprises a programmable logic device and a third filter circuit, wherein an input terminal of the third filter circuit is connected to a digital output terminal of the programmable logic device, and an output terminal of the third filter circuit is connected to a feedback input terminal of the power supply circuit; wherein:
the programmable logic device is configured to obtain the target switching frequency, process the target switching frequency according to the second mapping relationship, and output a second duty cycle voltage through the digital output terminal; and
the third filter circuit is configured to perform a filtering process on the second duty cycle voltage to obtain the target feedback voltage.

11. A switching transistor drive voltage control method, wherein the method comprises:
acquiring a target sample voltage corresponding to an alternating current (AC)-side voltage of a power conversion circuit; and
performing a mapping process on the target sample voltage according to a first mapping relationship to obtain a target feedback voltage, wherein the first mapping relationship comprises that a magnitude of a feedback voltage corresponding to a first sample voltage is not greater than a magnitude of a feedback voltage corresponding to a second sample voltage, wherein a magnitude of the first sample voltage is greater than a magnitude of the second sample voltage;
wherein the target feedback voltage is used for determining a target drive voltage based on the target feedback voltage to drive conduction of a switching transistor, a relationship between a magnitude of the target drive voltage and a magnitude of the target feedback voltage is a negative correlation, and a switching frequency of the switching transistor varies with a magnitude of the AC-side voltage.

12. A switching transistor drive voltage control method, wherein the method comprises:
obtaining a target switching frequency of a switching transistor of a power conversion circuit; and
processing the target switching frequency according to a second mapping relationship to obtain a target feedback voltage, wherein the second mapping relationship comprises that a magnitude of a feedback voltage corresponding to a first switching frequency is not less than a magnitude of a feedback voltage corresponding to a second switching frequency, wherein the first switching frequency is greater than the second switching frequency;
wherein the target feedback voltage is used for determining a target drive voltage based on the target feedback voltage to drive conduction of the switching transistor, a relationship between a magnitude of the target drive voltage and a magnitude of the target feedback voltage is a negative correlation, and a switching frequency of the switching transistor varies with a magnitude of an AC-side voltage of the power conversion circuit.

13. A power converter, wherein the power converter comprises the switching transistor drive voltage control circuit according to any one of claims 1 to 10 and the power conversion circuit;
wherein the switching transistor drive voltage control circuit is connected to a drive terminal of each switching transistor in the power conversion circuit.

14. A switching transistor drive voltage control method, **characterized in that** the method comprises:
performing a sampling process on an AC-side voltage of a power conversion circuit to obtain a target sample voltage; and
determining a target drive voltage based on the target sample voltage, wherein the target drive voltage is used for driving conduction of a switching transistor in the power conversion circuit, a switching frequency of the switching transistor varies with a magnitude of the AC-side voltage, and the target drive voltage is positively correlated with the target sample voltage.

15. The method according to claim 14, wherein determining the target drive voltage based on the target sample voltage comprises:
determining a target feedback voltage based on the target sample voltage;
determining a target power supply voltage based on the target feedback voltage, wherein a relationship between a magnitude of the target power supply voltage and a magnitude of the target feedback voltage is a negative correlation; and
determining the target drive voltage based on the target power supply voltage.

16. The method according to claim 15, wherein determining the target feedback voltage based on the target sample voltage comprises:
performing processing based on the target sample voltage according to a first mapping relationship to obtain the target feedback voltage, wherein the first mapping relationship comprises that a magnitude of a feedback voltage corresponding to a first sample voltage is not greater than a magnitude of a feedback voltage corresponding to a second sample voltage, wherein a magnitude of the first sample voltage is greater than a magnitude of the second sample voltage.

17. The method according to claim 16, wherein performing the processing based on the target sample voltage according to the first mapping relationship to obtain the target feedback voltage comprises:
performing the processing based on the target sample voltage according to the first mapping relationship to obtain a first duty cycle voltage; and
performing a filtering process on the first duty cycle voltage to obtain the target feedback voltage.

18. The method according to claim 17, wherein the first mapping relationship comprises that a magnitude of a feedback voltage is linearly related to a magnitude of a sample voltage.

19. The method according to claim 17 or 18, wherein the first mapping relationship comprises that a magnitude of a feedback voltage is non-linearly related to a magnitude of a sample voltage.

20. The method according to any one of claims 15 to 19, wherein determining the target feedback voltage based on the target sample voltage comprises:
performing rectification and phase-shifting processing on the target sample voltage to obtain a rectified voltage; and
performing filtering and amplification processing on the rectified voltage to obtain the target feedback voltage.

21. A switching transistor drive voltage control method, wherein the method comprises:
obtaining a target switching frequency of a switching transistor in a power conversion circuit;
processing the target switching frequency according to a second mapping relationship to obtain a target feedback voltage, wherein the second mapping relationship comprises that a magnitude of a feedback voltage corresponding to a first switching frequency is not less than a magnitude of a feedback voltage corresponding to a second switching frequency, wherein the first switching frequency is greater than the second switching frequency; and
determining a target drive voltage based on the target feedback voltage, wherein the target drive voltage is used for driving conduction of the switching transistor in the power conversion circuit.

22. A switching transistor drive voltage control circuit, wherein the switching transistor drive voltage control circuit comprises a first sampling circuit and a drive circuit, and the first sampling circuit is directly or indirectly connected to the drive circuit; and
the switching transistor drive voltage control circuit is configured to execute the switching transistor drive voltage control method according to any one of claims 14 to 20.

23. A switching transistor drive voltage control circuit, wherein the switching transistor drive voltage control circuit comprises a second feedback circuit and a drive circuit, and the second feedback circuit is directly or indirectly connected to the drive circuit; and
the switching transistor drive voltage control circuit is configured to execute the switching transistor drive voltage control method according to claim 21.

24. A power converter, wherein the power converter comprises the switching transistor drive voltage control circuit according to any one of claims 22 to 23 and a power conversion circuit;
wherein the switching transistor drive voltage control circuit is connected to a drive terminal of each switching transistor in the power conversion circuit.
